**Europäisches Patentamt**

**European Patent Office**

**Office européen des brevets**

(11) Numéro de publication : **0 020 255**
**B1**

(12) **FASCICULE DE BREVET EUROPÉEN**

(45) Date de publication du fascicule du brevet :
09.03.83

(51) Int. Cl.³ : **H 04 Q 11/04, H 04 L 11/20**

(21) Numéro de dépôt : **80400728.4**

(22) Date de dépôt : **23.05.80**

(54) **Niveau de commutation d'un opérateur pour réseau de commutation de données numériques par paquets.**

(30) Priorité : **01.06.79 FR 7914124**

(43) Date de publication de la demande :
**10.12.80 Bulletin 80/25**

(45) Mention de la délivrance du brevet :
**09.03.83 Bulletin 83/10**

(84) Etats contractants désignés :
**BE DE**

(56) Documents cités :
**FR A 2 309 088**
**PROCEEDING OF THE IEEE, vol. 65, no. 9, septembre 1977 NEW YORK (US) M. J. ROSS et al. : « Design approaches and performance criteria for integrated voice/data switching », pages 1283 à 1295.**

(73) Titulaire : **THOMSON-CSF TELEPHONE**
**146, Boulevard de Valmy**
**F-92707 Colombes (FR)**

(72) Inventeur : **Dieudonne, Marc Paul Georges**
**"THOMSON-CSF" - SCPI 173 Boulevard Haussmann**
**F-75360 Paris Cedex 08 (FR)**

(74) Mandataire : **El Manouni, Josiane et al**
**THOMSON-CSF SCPI 173, Bld Haussmann**
**F-75379 Paris Cedex 08 (FR)**

Jouve, 18, rue St-Denis, 75001 Paris, France

## Niveau de commutation d'un opérateur pour réseau de commutation de données numériques par paquets

L'invention concerne le niveau de commutation d'un opérateur de commutation de données numériques par paquets, pour réseau de commutation de centres de télécommunications — y compris les centraux téléphoniques — et notamment pour réseau de commutation à structure répartie.

On appelle réseau de commutation un « maillage » qui comporte à chaque nœud un opérateur de commutation ou commutateur et dont les mailles sont constituées par des voies de transmission de données numériques, chaque voie reliant deux opérateurs et comportant les deux sens de communication ; pour traverser un commutateur chaque paquet passe d'une voie aval à une voie amont.

Les réseaux de commutation de données numériques par paquet, qui existent actuellement, ont des opérateurs de commutation très éloignés : par exemple, il n'y a qu'une douzaine de commutateurs pour toute la France dans le cas du réseau téléinformatique TRANSPAC. Pour ces réseaux le temps de commutation est très faible devant le temps de transmission, ce temps de commutation est donc négligeable.

Par contre, pour utiliser un réseau à commutation par paquets dans un central, il faut tenir compte du fait que les temps de commutation et de transmission sont du même ordre de grandeur. Il faut donc que la commutation soit très rapide et réponde aux contraintes du type de transmission le plus exigeant, c'est-à-dire la téléphonie.

Un niveau de commutation est décrit dans la demande de brevet français n° 2 309 088. Ce niveau de commutation comprend n portes bidirectionnelles comportant chacune une porte d'entrée munie d'une entrée et d'une sortie, et une porte de sortie munie d'une entrée et d'une sortie, et étant reliées chacune à une porte bidirectionnelle d'un autre opérateur du même réseau, chaque porte d'entrée pouvant être reliée à n'importe laquelle des n portes de sortie via une ligne omnibus commune, gérée par un circuit logique de commande unique, à laquelle les sorties des portes d'entrée et les entrées des portes de sortie sont connectées, et chaque porte de sortie comportant un circuit d'émission comprenant essentiellement un registre parallèle-série de sortie.

Le niveau de commutation, selon l'invention offre un temps de commutation suffisamment court pour permettre son utilisation pour la commutation de données téléphoniques.

Cet objet est obtenu grâce à un niveau de commutation du genre décrit dans la demande de brevet français n° 2 309 088, et dans lequel chaque porte de sortie comporte également une mémoire vive de stockage dont les entrées de données sont reliées à la ligne omnibus commune, dans lequel le circuit logique de commande comporte deux logiques programmées, l'une d'écriture, l'autre de lecture, fournissant respectivement, via un multiplexeur de sortie, les adresses d'écriture et de lecture des mémoires de stockage des différentes portes de sortie, dans lequel chaque porte de sortie comporte également une mémoire de marquage des priorités, de type « premier entré-premier sorti », qui reçoit en entrée les adresses d'écriture des mémoires de stockage fournies par la logique programmée d'écriture, la logique de commande de lecture élaborant les adresses de lecture des mémoires de stockage des différentes portes de sortie à partir des adresses d'écriture de ces mémoires de stockage fournies par la mémoire de marquage des priorités, et dans lequel les sorties de données de la mémoire de stockage sont reliées aux entrées du registre parallèle-série de sortie du circuit d'émission.

Selon une autre caractéristique de l'invention, chaque porte d'entrée comporte deux registres de mémorisation intermédiaire et un circuit d'autorisation de lecture pour recevoir les données en parallèle au rythme de l'horloge distante et pour fournir ces mêmes données en série au rythme de l'horloge locale.

D'autres caractéristiques de l'invention apparaîtront plus clairement à la lecture de la description suivante d'un exemple de réalisation, cette description étant faite en relation avec les dessins ci-annexés dans lesquels :

la figure 1 représente un exemple de réseau de commutation dans lequel chaque opérateur comporte un niveau de commutation conforme à l'invention ;

la figure 2 représente le schéma de principe d'un opérateur comportant un niveau de commutation conforme à l'invention ;

la figure 3 représente une porte d'entrée ou circuit de réception d'une porte bidirectionnelle ;

la figure 4 représente un exemple de réalisation d'un niveau de commutation selon l'invention ;

la figure 5a représente la structure du mot d'état en écriture utilisé par le circuit de commande ;

la figure 5b représente un organigramme montrant le fonctionnement du circuit de lecture cyclique des portes d'entrée et d'écriture des mémoires de stockage ;

la figure 6a représente la structure du mot d'état en lecture utilisé par le circuit de commande ;

la figure 6b représente un organigramme montrant le fonctionnement du circuit de lecture cyclique des mémoires de stockage et d'écriture des registres de sortie ;

la figure 7 représente un circuit d'émission d'une porte de sortie.

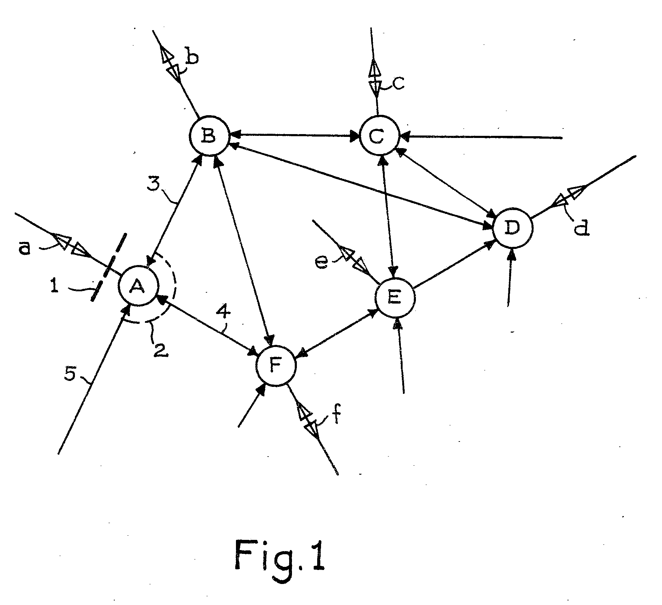

La figure 1 représente l'agencement général d'un réseau de commutation dans lequel chaque opérateur comporte un niveau de commutation conforme à l'invention.

A chaque nœud, le réseau comporte un opérateur ou commutateur tel que A, B, C, D, E et F. Chaque opérateur comporte un microcalculateur dont le volume des informations qu'il peut traiter fixe la puissance de l'opérateur.

Chaque opérateur possède également une interface vers l'extérieur connectée à un circuit de jonction ou un circuit d'abonné du réseau téléphonique ou au réseau de commutation de donnée. Ainsi, pour l'opérateur A l'interface 1 vers l'extérieur est connectée à la jonction a.

Chaque opérateur possède enfin une interface vers l'intérieur connectée au moins à un autre opérateur du réseau et au plus à tous les autres opérateurs du réseau. Ces liaisons ou mailles du réseau sont constituées par des voies qui comportent les deux sens de communication.

Par exemple, pour l'opérateur A l'interface 2 vers l'intérieur est connectée à l'opérateur B par la voie 3, à l'opérateur F par la voie 4 et à un autre opérateur du réseau par la voie 5.

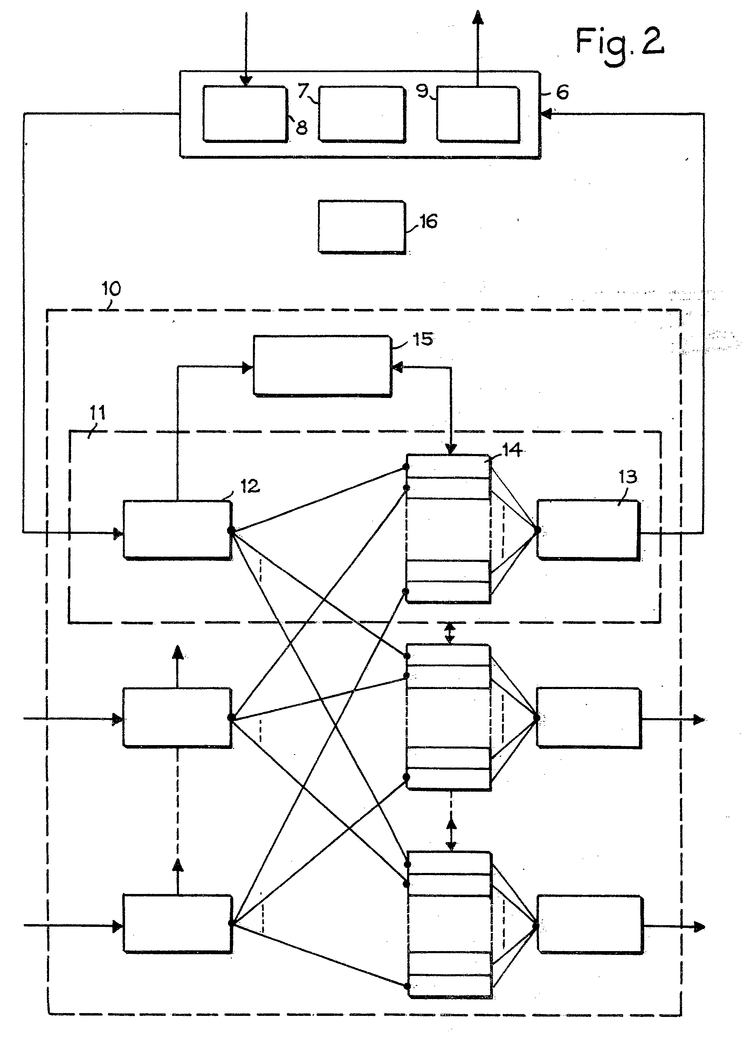

C'est cette interface vers l'intérieur du réseau, appelée aussi niveau de commutation et représentée à la figure 2, qui est l'objet du brevet.

La figure 2 représente le schéma de principe d'un opérateur comportant un niveau de commutation conforme à l'invention.

Cet opérateur comporte un niveau supérieur 6 constitué par un microcalculateur 7 et une interface vers l'extérieur constituée d'une partie réception 8 et d'une partie émission 9.

La partie réception 8 a pour fonction de former avec l'aide du microcalculateur les paquets à partir des informations fournies par la jonction.

L'opérateur, selon l'invention, concerne plus particulièrement la commutation de données numériques par paquets « autodirigés », c'est-à-dire que chaque paquet comporte un en-tête qui comprend autant d'étiquettes de sélection que de commutateurs que le paquet doit traverser dans le réseau, chaque étiquette de sélection étant associée à un commutateur et indiquant l'identité de la voie aval à sélectionner, et dans laquelle les étiquettes de sélection sont rangées dans l'ordre des commutateurs que le message doit traverser. C'est la partie réception 8 qui détermine le chemin à parcourir à travers le réseau et qui inscrit l'en-tête de chaque paquet.

La partie émission 9 effectue la transformation inverse et émet les informations remises en forme sur la jonction.

Une autre fonction du niveau supérieur 6 est le traitement des paquets erronés.

Ce niveau supérieur n'est pas décrit, car il n'est pas l'objet du brevet.

L'opérateur comporte également un niveau de commutation 10, objet du brevet, qui est constitué par n portes bidirectionnelles telles que la porte 11. L'une de ces portes (la porte 11 sur la figure 2) assure la liaison avec le niveau supérieur 6, les autres sont reliées à des portes bidirectionnelles de niveaux de commutation d'autres opérateurs du réseau.

Chaque porte bidirectionnelle telle que 11 comporte une porte d'entrée ou circuit de réception 12 et une porte de sortie qui comprend un circuit d'émission 13 précédé par un dispositif de stockage 14.

Toutes les portes d'entrée et de sortie sont reliées à un même circuit de commande 15. Chaque circuit de réception comporte une entrée et une sortie ainsi que chaque circuit d'émission et chaque dispositif de stockage comporte n circuits de mémorisation, chacun de ces n circuits étant affecté à l'un des n circuits de réception de l'opérateur.

La sortie de chaque circuit de réception peut être connectée à l'un des n circuits de stockage qui lui sont attribués, les liaisons étant toutes réalisées par l'intermédiaire d'une même ligne omnibus à trois états.

Les n sorties des circuits de mémorisation d'un même dispositif de stockage sont reliées à l'entrée du circuit d'émission correspondant.

L'opérateur comporte enfin, une horloge interne 16.

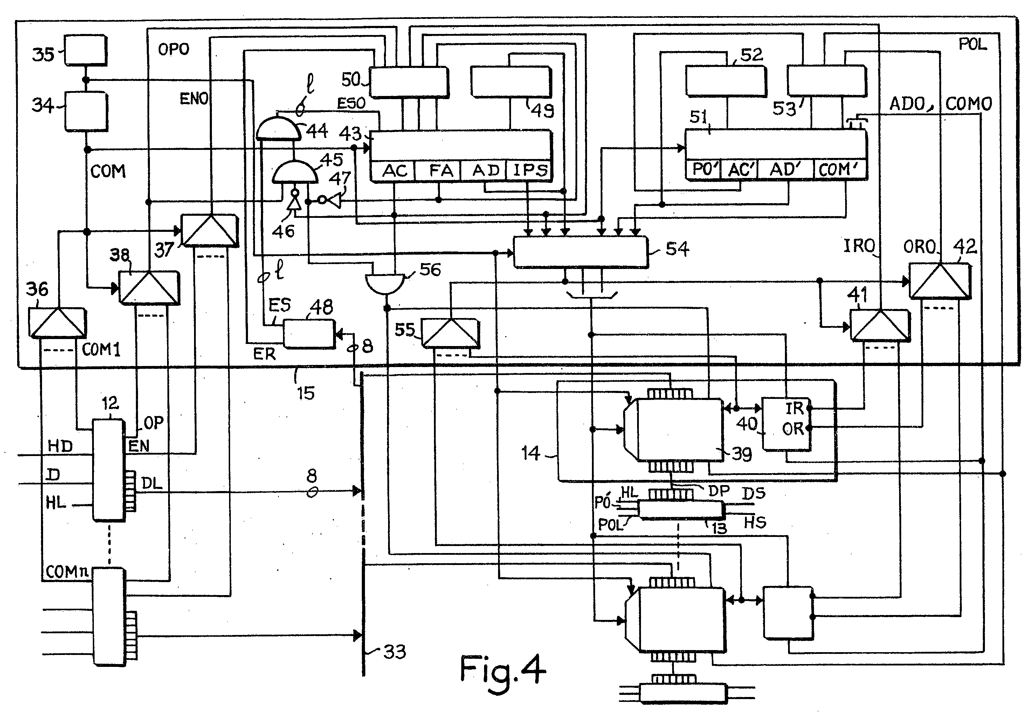

La figure 4 donne un exemple de réalisation du niveau de commutation schématisé à la figure 2.

Dans cet exemple, on utilise pour la transmission des paquets entre opérateurs du réseau une transmission unidirectionnelle, série et asynchrone avec horloge séparée, c'est-à-dire qu'elle nécessite deux fils pour chaque sens de transmission : un pour les données en série et un pour l'horloge synchrone des données, cette horloge n'étant admise qu'en présence de données. Ce type de transmission a l'avantage de réduire le plus possible le matériel d'interface.

Par contre, à l'intérieur de l'opérateur, on utilise une transmission parallèle sur huit fils dans cet exemple ; le nombre de fils dépend du débit à assurer.

Un circuit de réception 12 comporte une entrée en théorie, ce qui correspond à deux entrées dans la pratique : une pour les données D, une pour l'horloge HD. Ce circuit de réception a pour fonction de transformer les données « série » au rythme de l'horloge reçue HD en données « parallèle » au rythme de l'horloge locale HL fournie par l'horloge interne 16 de même fréquence nominale que l'horloge distante.

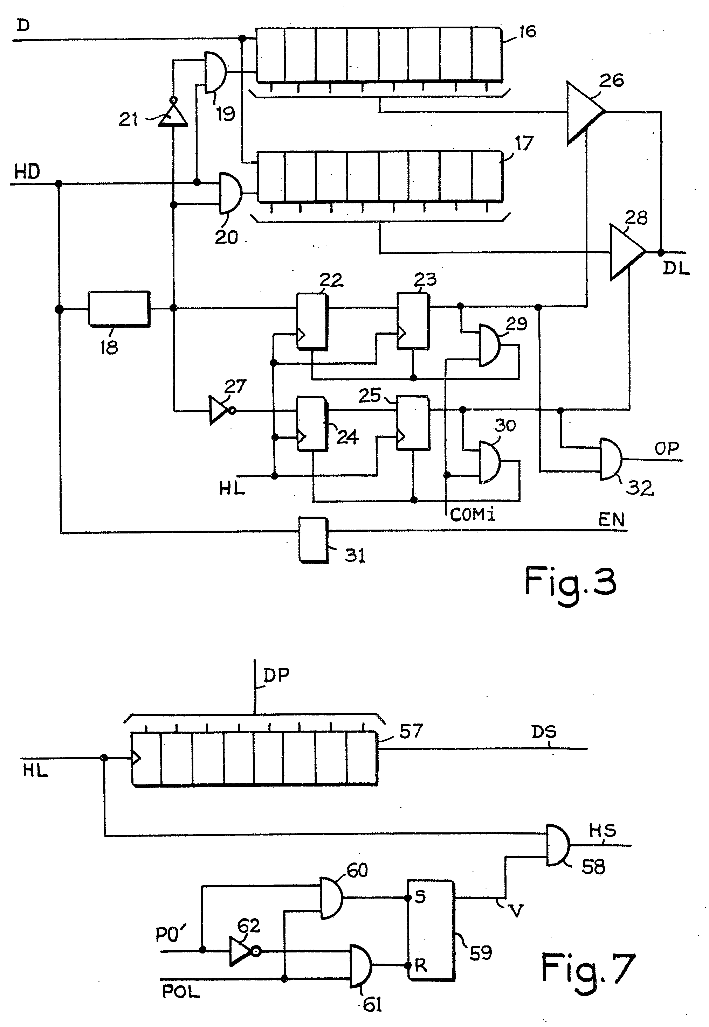

Ce circuit 12 est représenté à la figure 3. Il comprend deux registres à décalage 16 et 17 à une entrée série et huit sorties en parallèle, l'entrée série de chacun de ces registres 16 et 17 recevant les données D.

Le circuit 12 comprend également un compteur 18 à quatre éléments binaires dont l'entrée d'horloge reçoit le signal HD et dont la sortie est reliée d'une part à l'une des entrées d'une porte « ET » 19 via un inverseur 21, d'autre part à l'une des entrées d'une porte « ET » 20. La porte « ET » 19 reçoit sur son autre entrée le signal d'horloge HD et sa sortie est reliée à l'entrée d'horloge du registre 16. De même, la porte « ET » 20 reçoit sur son autre entrée le signal d'horloge HD et sa sortie est reliée à l'entrée d'horloge du registre 17.

Ainsi, l'entrée d'horloge du registre 16 reçoit le signal HD pendant huit périodes de ce signal, ce qui correspond à l'écriture d'un octet dans le registre 16, pendant ce temps l'entrée d'horloge du registre 17 reçoit un signal constant et le contenu du registre 17 est inchangé. Pendant les huit périodes suivantes du signal HD, la procédure est inversée et l'on écrit un octet dans le registre 17.

Le circuit de réception 12 comprend quatre bascules 22, 23, 24 et 25 de type D qui reçoivent en entrée d'horloge le signal d'horloge locale HL.

L'entrée de la bascule 22 est reliée à la sortie du compteur 18 et l'entrée de la bascule 23 est reliée à la sortie de la bascule 22. La sortie de la bascule 23 est reliée à l'entrée de commande d'un ensemble de huit portes « trois états », représentées par une seule porte 26 sur la figure 3, dont les entrées sont reliées aux sorties des registres 16.

L'entrée de la bascule 24 est reliée à la sortie du compteur 18 *via* un inverseur 27 et l'entrée de la bascule 25 est reliée à la sortie de la bascule 24. La sortie de la bascule 25 est reliée à l'entrée de commande d'un ensemble de huit portes « trois états », représentées par une seule porte 28 sur la figure 3, dont les entrées sont reliées aux sorties du registre 17 et dont les sorties sont reliées aux sorties respectives de l'ensemble 26, fournissant ainsi les données DL en parallèle.

Les bascules 22 et 23 sont remises à zéro par le signal issu d'une porte « ET » 29 qui reçoit en entrée le signal d'autorisation de lecture du registre 16 issu de la bascule 23 et un signal COMi issu du circuit de commande 15. De même, les bascules 24 et 25 sont remises à zéro par le signal issu d'une porte « ET » 30 qui reçoit en entrée le signal d'autorisation de lecture du registre 17 issu de la bascule 25 et le signal COMi.

Ainsi, lorsque l'on écrit un octet dans le registre 16, c'est-à-dire lorsque le signal issu du compteur 18 est au niveau logique bas, désigné par « O », pendant huit périodes d'horloge, la lecture du registre 17 est autorisée par le signal issu de la bascule 23 avec un retard dû aux bascules 22 et 23 afin d'éviter tout conflit entre les signaux d'horloge HD et HL. Inversement pendant les huit périodes d'horloge suivantes on écrit dans le registre 17 et on lit le registre 16. Dès que la lecture d'un registre a été effectuée sur ordre du circuit 15 (signal COMi), le signal d'autorisation correspondant retombe à « 0 ».

Le circuit de réception 12 fournit donc, sans retard et sans conflit entre horloges, les données DL par octet en parallèle et au rythme de l'horloge interne HL.

D'autre part, le circuit de réception 12 fournit un signal EN qui indique que l'entrée est en activité, lorsqu'il est au niveau logique haut, et qui est issu d'un monostable 31 à redéclenchement qui reçoit en entrée le signal d'horloge distante HD.

Enfin le circuit 12 fournit un signal OP qui est issu d'une porte « ET » 32 recevant les deux signaux d'autorisation de lecture des registres 16 et 17 et qui indique, lorsqu'il est au niveau logique haut, qu'un octet est prêt à être lu.

Les sorties de données DL des n circuits de réception sont toutes reliées au bus commun 33 trois états et l'ensemble des sorties des signaux EN et OP sont reliées au circuit de commande 15, comme on l'a représenté à la figure 4.

Le circuit de commande 15 est commun à tous les circuits du niveau de commutation ; pour traiter successivement les données provenant des n circuits de réception il comporte un compteur 34 « modulo n » qui fournit un signal COM et qui est activé par un oscillateur 35. La période de l'horloge locale HL étant égale à T secondes, chaque porte d'entrée fournit un octet toutes les 8T secondes et le circuit de commande doit donc lire l'ensemble des n portes en un cycle de 8T secondes, l'oscillateur 35 a donc une période P égale à 8T/n et est synchrone de l'horloge locale HL.

Un décodeur 36 à n sorties reçoit le signal COM et fournit les signaux COMi (avec i = 1 à n) respectivement à chacun des circuits de réception.

La sortie d'indication EN d'activité de chacun des n circuits 12 de réception est reliée à l'une des n entrées d'un multiplexeur 37 qui fournit en sortie un signal ENO ; de même la sortie d'indication OP de disponibilité d'octet de chacun des n circuits 12 de réception est reliée à l'une des n entrées d'un multiplexeur 38 qui fournit en sortie un signal OPO. Les deux multiplexeurs 37 et 38 reçoivent en entrée de commande le signal COM de telle sorte que lorsque le signal COM vaut i (i prenant les valeurs 1 à n) les signaux issus des multiplexeurs 37 et 38 sont identiques aux signaux issus du $i^{ème}$ circuit de réception. Le circuit de commande 15 comporte une première partie consacrée à la lecture cyclique des n circuits 12 de réception et à l'écriture des n dispositifs 14 de stockage et à l'écriture des n circuits 13 d'émission.

Chaque dispositif 14 de stockage comporte une mémoire 39 vive de x mots de neuf éléments binaires qui est découpée en autant de pages qu'il y a de circuits de réception, c'est-à-dire n dans cet exemple, ce qui a été représenté très schématiquement à la figure 2.

Chaque dispositif 14 comporte également une mémoire 40 de type « première entrée, première sortie » (FIFO : first in first out) associée à la mémoire vive 39 et permettant le marquage des priorités. La sortie IR d'indication d'entrée prête (IR = « 1 » indique que l'entrée est prête) de chacune des n mémoires telles que 40 est reliée à l'une des n entrées d'un multiplexeur 41 dont la sortie fournit un signal IRO : de même la sortie OR d'indication de sortie prête (OR = « 1 » indique que la sortie est prête) de chacune des n mémoires telles que 40 est reliée à l'une des n entrées d'un multiplexeur 42 dont la sortie fournit un signal ORO.

Chacune des parties du circuit de commande est constituée par une logique programmée de n mots précédée de mémoires mortes programmées.

La première partie comprend donc une logique programmée 43 de n mots d'état en écriture des mémoires de stockage. Chacun des n mots représente le travail à exécuter sur l'octet qui se présente sur le circuit de réception correspondant.

Dans notre exemple la structure d'un mot d'état en écriture est celle représentée à la figure 5a.

Les deux premiers éléments binaires AC et FA indiquent :

— Lorsque AC et FA sont tous les deux égaux à « 0 » que le circuit de réception n'est pas encore en activité ;

— lorsque AC est égal à « 1 » et FA est égal à « 0 », que le circuit de réception est en activité et que l'octet présent est le premier octet d'un paquet ;

— lorsque AC et FA sont tous les deux égaux à « 1 », que le circuit de réception est en activité, que l'octet présent n'est pas le premier octet d'un paquet et que, la mémoire de type FIFO des priorités de la porte de sortie adressée étant pleine, le paquet n'est pas à écrire ;

— lorsque AC est égal à « 0 » et FA est égal à « 1 », que le circuit de réception est en activité, que l'octet présent n'est pas le premier du paquet et qu'il est à écrire.

Les éléments binaires suivants AD indiquent l'adresse où écrire l'octet dans la page affectée à la porte par laquelle le paquet entre dans la mémoire vive de stockage de la porte de sortie adressée.

Les derniers éléments binaires IPS (leur nombre $l$ étant égal au nombre entier immédiatement supérieur ou égal à $\log_2 n$) indique l'identité ou adresse de la porte par laquelle le paquet doit sortir, il s'agit de la première étiquette de sélection de l'en-tête du paquet. Pour obtenir cette étiquette de sélection IPS, la logique de commande 43 reçoit un signal ESO constitué par $l$ éléments binaires en parallèle et issu d'une porte « ET » 44 qui reçoit via une porte « ET » 45 le signal OPO, le signal AC inversé par la porte 46 et le signal FA inversé par la porte 47.

Le signal ES est issu d'un circuit de contrôle 48 qui est relié au bus commun 33. Le signal ES est constitué par $l$ premiers éléments binaires d'un octet en parallèle, le signal ESO est constitué par $l$ premiers éléments binaires du premier octet d'un paquet.

Le circuit 48 fournit un signal ER d'erreur à la mémoire 50, ce signal ER est établi par le circuit 48 à partir des $8\text{-}l$ éléments binaires de contrôle (par exemple par redondance) qui accompagnent les $l$ premiers éléments binaires.

La logique 43 est adressée par le signal COM et elle est précédée par une mémoire morte 49, qui reçoit l'adresse AD issue de 43 et lui fournit la nouvelle adresse AD + 1, et par une mémoire morte 50 qui reçoit en entrée les signaux ENO, OPO, IRO, ER et les signaux AC et FA issus de 43 et qui fournit à la logique 43 les nouvelles informations AC et FA.

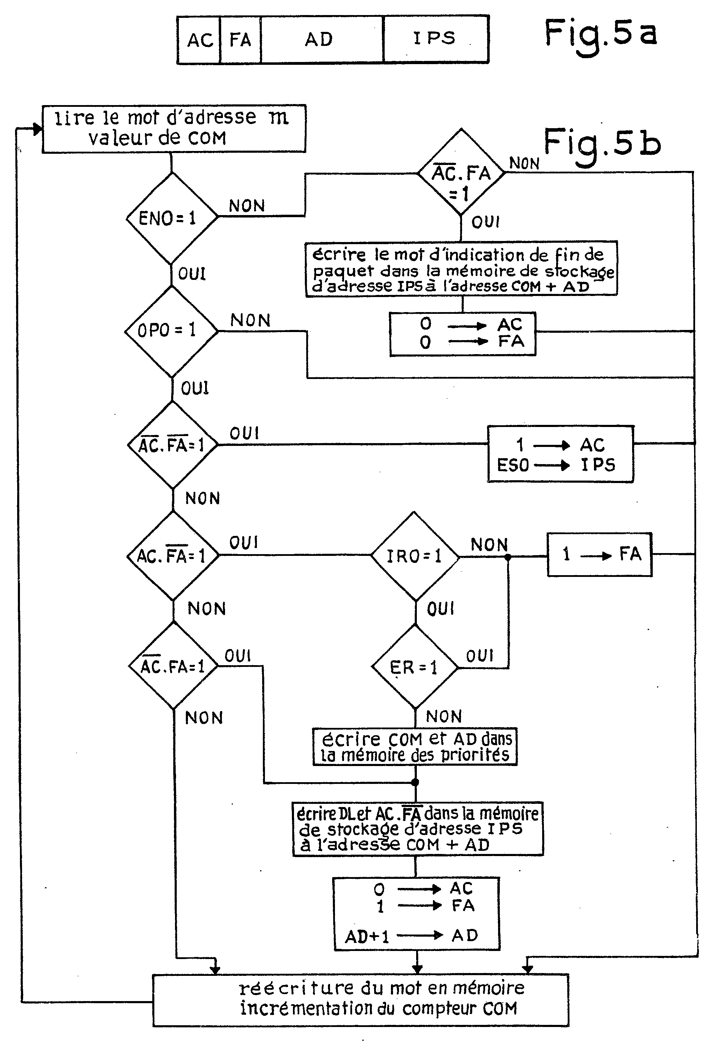

Le fonctionnement de la première partie du circuit de commande 15 est expliqué à l'aide de l'organigramme représenté à la figure 5b.

Le signal COM issu du compteur 34 ayant une valeur donnée m ($1 \leqslant m \leqslant n$), on commence par lire le mot d'adresse m dans la logique 43.

Puis on teste le signal ENO, si ENO est égal à « 0 », cela signifie que la m$^{\text{ième}}$ porte d'entrée n'est pas en activité et l'on teste $\overline{AC} \cdot FA$ pour savoir si la porte d'entrée était en activité à l'étape précédente. Si $\overline{AC} \cdot FA$ est égal à « 0 », la porte d'entrée n'était pas en activité et l'on passe au mot d'état suivant.

Par contre, si $\overline{AC} \cdot FA$ est égal à « 1 » la porte d'entrée était en activité et on écrit le mot suivant « 000000001 » d'indication de fin de paquet dans la mémoire de stockage IPS à l'adresse COM + AD. Cette écriture étant effectuée, lors de la réécriture du m$^{\text{ième}}$ mot d'état en mémoire on écrit « 0 » dans l'emplacement réservé à AC et « 0 » dans celui réservé à FA puis on passe au mot d'état suivant après incrémentation du compteur 34. Entre deux paquets, il y a obligatoirement un temps de silence pendant lequel la porte n'est pas en activité ce qui permet une initialisation du mot d'état correspondant.

Si ENO est égal à « 1 », cela signifie que la m$^{\text{ième}}$ porte est en activité et l'on teste si un octet est prêt à être lu en sortie de cette m$^{\text{ième}}$ porte.

Si OPO est égal à « 0 », il n'y a pas d'octet prêt et l'on passe au mot d'état suivant.

Si OPO est égal à « 1 », il y a un octet prêt et l'on teste s'il s'agit du premier octet d'un paquet.

Si $\overline{AC} \cdot \overline{FA}$ est égal à « 1 », il s'agit du premier octet d'un paquet et lors de la réécriture du m$^{\text{ième}}$ mot d'état, on écrit « 1 » dans l'emplacement réservé à AC et on écrit l'étiquette ESO de sélection de la porte de sortie dans l'emplacement réservé à IPS, puis on passe au mot d'état suivant après incrémentation du compteur 34.

Si $\overline{AC} \cdot \overline{FA}$ est égal à « 0 », il ne s'agit pas d'un premier octet et l'on teste AC · $\overline{FA}$.

Si AC · $\overline{FA}$ est égal à « 1 », il s'agit du second octet du paquet qui doit être en sortie le premier octet du paquet émis et l'on teste IRO pour savoir sur la file d'attente correspondant à la sortie indiquée par IPS est pleine.

Si IRO est égal à « 0 », cette file d'attente est pleine et lors de la réécriture du m$^{\text{ième}}$ mot d'état on écrit « 1 » dans l'emplacement réservé à FA. Puis on passe au mot d'état suivant après incrémentation du compteur 34. FA et AC étant à « 1 », les octets suivants du paquet ne sont pas pris en compte, c'est-à-dire que le paquet est éliminé en entier ; ce fait est enregistré dans un compteur qui est lu par le niveau supérieur 6 de l'opérateur.

Si IRO est égal à « 1 » cette file d'attente n'est pas pleine et l'on effectue un test sur le signal d'erreur ER issu du circuit 48.

Si ER est égal à « 1 », le niveau supérieur 6 en est informé et l'on effectue la même opération que lorsque IRO est égal à « 0 ».

Si ER est égal à « 0 », on écrit la valeur m du signal COM suivi de AD dans la mémoire FIFO 40 des priorités correspondant à IPS, et on écrit les données DL suivies d'un élément binaire égal à AC · $\overline{FA}$ dans la mémoire de stockage, correspondant à IPS, à l'adresse constituée par la valeur m du signal COM suivi de AD. Ces écritures étant effectuées, lors de la réécriture du $m^{ième}$ mot d'état, on écrit « 0 » dans l'emplacement réservé à AC, « 1 » dans l'emplacement réservé à FA et on ajoute une unité à la valeur de AD à l'aide de la mémoire morte 49.

Il reste à envisager le cas où AC · $\overline{FA}$ est égal à « 0 », dans ce cas on teste $\overline{AC}$ · FA = 1.

Si $\overline{AC}$ · FA est égal à « 0 » cela signifie que AC et FA sont égaux à « 1 », l'octet ne doit pas être pris en compte, comme on l'a vu plus haut et l'on passe au mot d'état suivant.

Par contre si $\overline{AC}$ · FA est égal à « 1 », cela signifie qu'il s'agit d'un octet d'un paquet que l'on a commencé à écrire en mémoire de stockage, on passe donc à l'écriture en mémoire de stockage qui figure déjà sur l'organigramme.

La seconde partie du circuit de commande 15 comprend une logique programmée 51 de n mots d'état en lecture des mémoires de stockage.

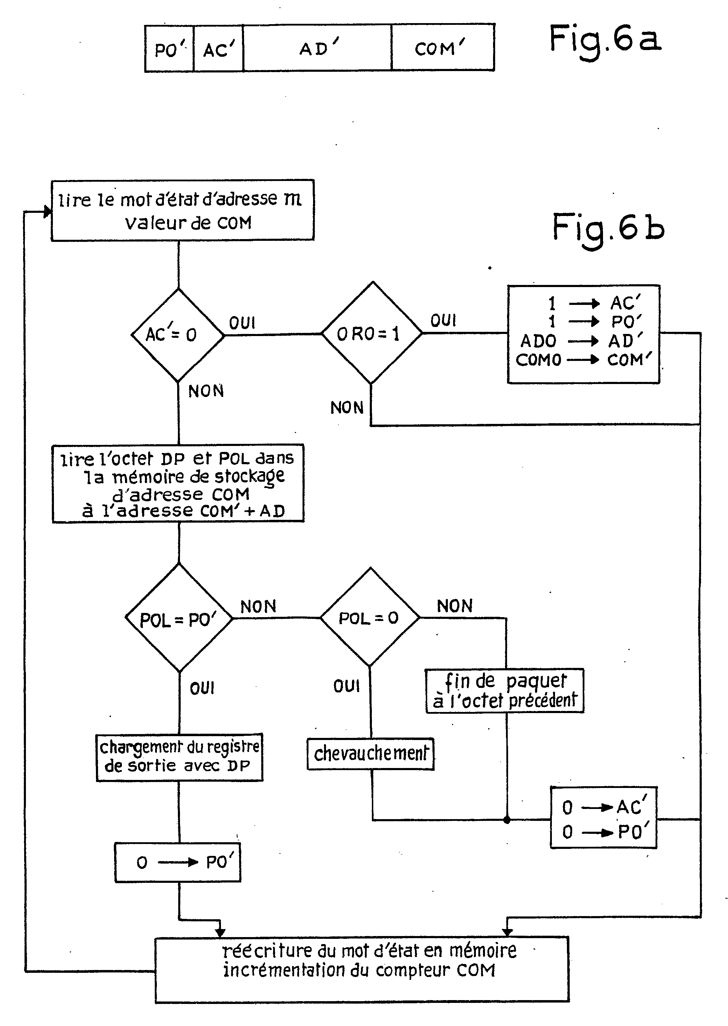

Dans notre exemple, la structure d'un mot d'état en lecture est celle représentée à la figure 6a.

Chacun des n mots représente le travail à exécuter sur la mémoire de stockage correspondante.

Le premier élément binaire PO' indique lorsqu'il est à « 1 » que l'on va lire le premier octet d'un paquet.

Le second élément binaire AC' indique lorsqu'il est à « 1 » qu'une activité de lecture est en cours.

Les éléments binaires suivants AD' et COM' indiquent respectivement l'adresse dans la page et la page où lire l'octet.

La logique 51 est adressée par le signal COM et elle est précédée par une mémoire morte 52, qui reçoit l'adresse AD' issue de 51 et lui fournit la nouvelle adresse AD' + 1, et par une mémoire morte 53 qui reçoit en entrée le signal AC' issu de 51, le signal ORO issu de 42 et le signal POL qui est le dernier élément binaire des mots lus dans les mémoires de stockage 39 en même temps que les données et qui fournit à la logique 51 les nouvelles informations PO' et AC', la logique de commande 51 recevant directement les informations d'adressage ADO et COMO issues des mémoires de priorités 40. Cet élément binaire POL est égal à « 1 », uniquement quand il accompagne le premier octet d'un paquet et quand le mot lu est le mot d'indication de fin.

Le fonctionnement de cette seconde partie du circuit de commande 15 est expliqué à l'aide de l'organigramme représenté à la figure 6b.

Le signal COM issu du compteur 34 ayant une valeur donnée m ($1 \leq m \leq n$), on commence à lire le mot d'adresse m dans la logique 51 qui correspond au $m^{ième}$ dispositif de stockage 14.

Puis on teste l'élément binaire AC', si AC' est égal à « 0 », cela signifie qu'il n'y a pas d'activité de lecture de la $m^{ième}$ mémoire de stockage en cours et l'on teste le signal ORO d'indication de sortie prête de la mémoire de priorité du $m^{ième}$ dispositif de stockage.

Si ORO est égal à « 0 » cela signifie que la sortie n'est pas prête et l'on passe au mot d'état suivant.

Si ORO est égal à « 1 » lors de la réécriture du $m^{ième}$ mot d'état on écrit « 1 » dans l'emplacement réservé à AC' ainsi que dans celui réservé à PO' et on l'écrit ADO et COMO respectivement dans les emplacements réservés à AD' et COM' ; puis on passe au mot d'état suivant.

Si AC' est égal à « 1 », on lit dans la $m^{ième}$ mémoire de stockage les informations DS de données et POL à l'adresse AD' de la page COM'.

Puis on compare l'élément binaire POL lu dans la mémoire et l'élément binaire PO' du mot d'état.

Si POL et PO' ont la même valeur, on charge le registre 13 de sortie avec les données DP et lors de la réécriture du mot d'état, on écrit « 0 » à l'emplacement réservé à PO' ; puis on passe au mot d'état suivant.

Si POL et PO' sont différents, si POL est égal à « 1 » et PO' est égal à « 0 », cela signifie que l'octet précédent était une fin de paquet, il faut aller chercher une nouvelle information de priorité et pour cela on réinitialise le mot d'état, c'est-à-dire que lors de la réécriture du mot d'état, on écrit « 0 » à l'emplacement réservé à AC' ainsi qu'à celui réservé à PO' . Puis on passe au mot d'état suivant.

Si POL est égal à « 0 » et PO' à « 1 », cela signifie qu'un paquet a été surchargé, il y a eu chevauchement ; aucun paquet n'est émis, on informe le niveau supérieur, puis on réinitialise le mot d'état et on passe au mot d'état suivant.

Pour commander les dispositifs de stockage le circuit de commande 15 comporte un multiplexeur de sortie 54 qui reçoit de la première partie de commande d'écriture trois signaux, premièrement le signal IPS, deuxièmement le signal COM et troisièmement le signal AD et qui reçoit de la seconde partie de commande de lecture trois signaux, premièrement le signal COM, deuxièmement le signal COM' et troisièmement le signal AD' .

Ce multiplexeur 54 est commandé par le signal d'horloge issu de l'oscillateur 35 qui commande le compteur 34 de telle sorte que, le signal COM ayant la valeur m pendant une période, la première demi-période est consacrée à l'écriture et la seconde à la lecture.

Ainsi, pendant la demi-période consacrée à l'écriture on a les signaux IPS, COM et AD respectivement sur la première, la deuxième et la troisième sortie du multiplexeur 54 et pendant la demi-période consacrée à l'écriture on a les signaux COM, COM' et AD' respectivement sur la première, la deuxième et la troisième sortie du multiplexeur 54.

La première sortie du multiplexeur 54 est reliée d'une part aux entrées de commande des multiplexeurs 41 et 42, d'autre part à l'entrée d'un décodeur 55 dont chacune des n sorties est reliée à l'entrée de sélection d'un des n dispositifs de stockage, c'est-à-dire que la $i^{ème}$ sortie du décodeur 55 est reliée aux entrées de sélection de la mémoire de stockage 39 et de la mémoire de priorité 40 du $i^{ème}$ dispositif de stockage.

L'ensemble constitué par la deuxième et la troisième sortie est relié directement aux entrées d'adressage de chacune des mémoires de stockage et aux entrées des mémoires de priorité.

D'autre part, chacune des mémoires de stockage a son entrée de commande de lecture-écriture reliée à l'oscillateur 35, a huit de ses entrées de données reliées au bus commun 33 et la neuvième entrée étant reliée à la sortie d'une porte « ET » 56 dont les entrées reçoivent les signaux AC et FA et a huit de ses sorties reliées au circuit d'émission 13 qui lui correspond, la neuvième sortie étant reliée à la mémoire morte 53 du circuit de commande et au même circuit d'émission 13 que les autres sorties.

L'ensemble de ces connexions permet de réaliser selon le processus décrit par les organigrammes les opérations d'écriture et de lecture des mémoires de stockage et de priorité ainsi que les opérations de chargement des registres de sortie des circuits d'émission 13.

Chaque circuit d'émission 13, représenté à la figure 7, comporte un registre 57 de sortie à huit entrées parallèles et à une sortie série. Les huit entrées parallèles sont reliées aux huit sorties de données de la mémoire de stockage 39 correspondante, de laquelle elles reçoivent les données DP et la sortie fournit le signal DS de sortie, l'entrée d'horloge du registre reçoit le signal HL d'horloge locale de l'opérateur.

Pour élaborer le signal d'horloge HS, qui accompagne les données DS sur un fil séparé dans le type de transmission utilisé entre opérateurs, on utilise une porte « ET » 58 qui reçoit d'une part le signal d'horloge HL, d'autre part un signal V de validation et qui fournit le signal HS.

Le signal V de validation est issu d'une bascule 59 de type RS dont l'entrée S est reliée à la sortie d'une porte « ET » 60 qui reçoit le signal PO' issu de la logique 51 du circuit de commande et le signal POL issu de la mémoire de stockage en même temps que les données DP et dont l'entrée R est reliée à la sortie d'une porte « ET » 61 qui reçoit le signal POL et le signal PO' inversé par l'inverseur 62.

L'opérateur, qui comporte un niveau de commutation semblable à celui décrit dans ce brevet, est capable de relier n'importe quelle entrée à n'importe quelle sortie, il y a donc une accessibilité totale et de façon simple grâce à la ligne omnibus commune.

D'autre part, l'étiquette utilisée par un opérateur est éliminée complètement avant émission vers l'opérateur suivant, de telle sorte qu'un paquet qui ne sort pas du niveau de commutation des opérateurs diminue d'un octet à chaque nœud et finit par disparaître, ce qui préserve le réseau d'une éventuelle saturation par des paquets « perdus ».

En outre, les files d'attente des portes de sortie se remplissent uniquement d'informations utiles, un seul élément binaire POL permettant d'obtenir les informations de début et de fin de paquet ; l'utilisation des mémoires vives pour ces files d'attente est très économique.

Enfin, si le contrôle détecte un paquet erroné, celui-ci n'est pas pris en compte et le niveau supérieur est informé.

**Revendications**

1. Niveau de commutation (10) d'un opérateur pour réseau de commutation de données numériques par paquets à l'intérieur duquel les données sont transmises en parallèle, niveau comprenant n portes bidirectionnelles (11) comportant chacune une porte d'entrée (12) et une porte de sortie (13, 14) et étant reliées chacune à une porte bidirectionnelle d'un autre opérateur du même réseau, niveau dans lequel chaque porte d'entrée (12) peut être reliée à n'importe laquelle des n portes de sortie (13, 14) via une ligne omnibus (33), gérée par un circuit logique de commande (15) unique, à laquelle les sorties des portes d'entrées et les entrées des portes de sortie sont connectées, niveau dans lequel chaque porte de sortie comporte un circuit d'émission (13) comprenant essentiellement un registre parallèle-série de sortie, caractérisé en ce que chaque porte de sortie comporte également une mémoire vive de stockage (39) dont les entrées de données sont reliées à la ligne omnibus commune (33), en ce que le circuit logique de commande (15) comporte deux logiques programmées, l'une (43, 49, 50) d'écriture, l'autre (51, 52, 53) de lecture, fournissant respectivement, via un multiplexeur de sortie (54), les adresses d'écriture et de lecture des mémoires de stockage des différentes portes de sortie, en ce que chaque porte de sortie comporte également une mémoire de marquage des priorités (40), de type « premier entré-premier sorti », qui reçoit en entrée les adresses d'écriture des mémoires de stockage fournies par la logique programmée d'écriture, la logique de commande de lecture élaborant les adresses de lecture des mémoires de stockage des différentes portes de sortie à partir des adresses d'écriture de ces mémoires de stockage fournies par la mémoire de marquage des priorités, et en ce que les sorties de données de la mémoire de stockage (39) sont reliées aux entrées du registre parallèle-série de sortie du circuit d'émission (13).

2. Niveau de commutation d'un opérateur pour réseau de commutation de données numériques par paquets selon la revendication 1, cet opérateur possédant sa propre horloge (16) appelée horloge locale, recevant et émettant des données en série avec une horloge distante caractérisé en ce que chaque porte d'entrée (12) est constituée par deux registres série-parallèle de mémorisation (16, 17) intermédiaire, par des moyens d'autorisation d'écriture (19, 20, 21) et par des moyens d'autorisation de lecture (22 à 30), les entrées série des registres étant reliées entre elles, les entrées d'horloge étant activées alternativement par le signal d'horloge distante (HD) sous contrôle du circuit d'autorisation d'écriture et les sorties parallèles étant reliées à la ligne omnibus (33) *via* des portes trois états (26, 28) qui sont commandées par le circuit d'autorisation de lecture et permettent de lire alternativement les deux registres au rythme de l'horloge locale, de telle sorte que lorsqu'on écrit dans le premier registre on lit le second et inversement lorsqu'on écrit dans le second, on lit le premier.

3. Niveau de commutation d'un opérateur pour réseau de commutation de données numériques par paquets selon la revendication 1, caractérisé en ce que les deux logiques programmées d'écriture et de lecture des mémoires de stockage comportent chacune une mémoire vive de n mots (43 et 51), précédée de deux mémoires mortes (49, 50 et 52, 53) et reçoivent des informations des portes d'entrée et des portes de sortie, et en ce que le circuit de commande (15) comprend en outre un compteur (34) modulo n d'adressage des logiques programmées activé par un oscillateur (35), les entrées du multiplexeur de sortie (54) étant reliées aux sorties des logiques programmées et ses sorties, fournissant alternativement les signaux issus de l'une et de l'autre logique programmée, au rythme des opérations d'écriture et de lecture donné par l'oscillateur, étant reliées aux dispositifs de stockage des portes de sortie.

**Claims**

1. Switching level (10) of an operator in a digital data block switching network within which the data are transmitted in parallel, the level comprising n bidirectional ports (11) each comprising an input port (12) and an output port (13, 14) and being each connected to a bidirectional port of another operator of the same network, each input port (12) of the level being adapted to be connected to any of the n output ports (13, 14) through a bus line (33) controlled by a single logic control circuit (15) and to which the outputs of the input ports and the inputs of the output ports are connected, each output port of the level comprising a transmitter circuit (13) essentially comprising a parallel-serial output register, characterized in that each output port further comprises a read/write storage memory (39) the data inputs of which are connected to a the common bus line (33), in that the logic control circuit (15) comprises two programmed logic circuits, one (43, 49, 50) for writing and the other (51, 52, 53) for reading, and supplying the writing and reading addresses, respectively, of the storage memory of the different output ports through an output multiplexer (54), in that each output port further comprises a priority marking memory (40) of « first in- first out » type, the inputs of which are the writing addresses of the storage memory supplied by the programmed writing logic, the reading control logic generating the reading addresses of the storage memories of the different output ports from the writing addresses of these storage memories supplied by the priority marking memory, and in that the data outputs of the storage memory (39) are connected to the inputs of the parallel-serial output register of the transmitter circuit (13).

2. Switching level of an operator in a digital data block switching network in accordance with claim 1, said operator including its own clock (16) termed a local clock, and receiving and transmitting serial data with a remote clock, characterized in that each input port (12) is formed of two serial-parallel intermediate storage registers (16, 17), of writing enabling means (19, 20, 21) and of reading enabling means (22 to 30), the serial inputs of these registers being interconnected, the clock inputs being alternatingly activated by the remote clock signal (HD) under control of the writing enabling circuit and the parallel outputs being connected to the bus line (33) through three-state ports (26, 28) controlled by the reading enabling circuit, and allowing to read the two registers alternatingly at the rhythm of the local clock, so that the second register is read while writing into the first and vice versa when writing into the second and reading the first.

3. Switching level of an operator in a digital data block switching network in accordance with claim 1, characterized in that the two programmed writing and reading logic circuits of the storage memories each comprise a read/write memory having n words (43 and 51) preceded by two read-only memories (49, 50 and 52, 53), and receive information from the input ports and the output ports, and in that the control circuit (15) further comprises a modulo-n-counter (34) for addressing the programmed logic circuits and activated by an oscillator (35), the inputs of the output multiplexer (54) being connected to the outputs of the programmed logic circuits and its outputs alternatingly supplying the signals from one and the other programmed logic at the rhythm of the writing and reading operations determined by the oscillator, and being connected to the storage devices of the output ports.

**Ansprüche**

1. Vermittlungsniveau (10) eines Wählers für ein mit digitalen Datenpaketen arbeitendes Vermittlungsnetzwerk, in dem die Daten parallel übertragen werden, wobei dieses Niveau n bidirektionale Torschaltungen (11) jeweils mit einem Eingangstor (12) und einem Ausgangstor (13, 14) umfaßt, von denen jedes mit einem bidirektionalen Tor eines anderen Wählers desselben Netzes verbunden ist, wobei in diesem Niveau jedes Eingangstor (12) mit einem beliebigen der n Ausgangstore (13, 14) über eine Busleitung (33) verbindbar ist, die von einer einzigen logischen Steuerschaltung (15) verwaltet wird, an die die Ausgänge der Eingangstore und die Eingänge der Ausgangstore angeschlossen sind, und wobei in diesem Niveau jedes Ausgangstor eine Sendeschaltung (13) enthält, die im wesentlichen ein Parallel — Seriell-Ausgangsregister umfaßt, dadurch gekennzeichnet, daß jedes Ausgangstor ferner einen Arbeitsspeicher (39) umfaßt, dessen Dateneingänge mit der gemeinsamen Busleitung (33) verbunden sind, daß die logische Steuerschaltung (15) zwei programmierte Logikeinrichtungen, die eine (43, 49, 50) zum Einschreiben und die andere (51, 52, 53) zum Auslesen, umfaßt, von denen die eine die Schreibadressen und die andere die Leseadressen der Speicher der verschiedenen Ausgangstore über einen Ausgangsmultiplexer (54) liefert, daß jedes Ausgangstor ferner einen Vorrang-Markierungsspeicher (40) vom Typ « zuerst ein- zuerst aus » enthält, der als Eingangsgrößen die Schreibadressen der Speicher empfängt, die von der programmierten Schreiblogik geliefert werden, wobei die Lese-Steuerlogik die Leseadressen der Speicher der verschiedenen Ausgangstore ausgehend von den Schreibadressen dieser Speicher erzeugt, die von dem Vorrang-Markierspeicher geliefert werden, und daß die Datenausgänge des Arbeitsspeichers (39) mit den Eingängen des Parallel-Seriell-Ausgangsregisters der Sendeschaltung (13) verbunden sind.

2. Vermittlungsniveau eines Wählers für ein mit digitalen Datenpaketen arbeitendes Vermittlungsnetz nach Anspruch 1, wobei der Wähler seinen eigenen, als örtlicher Taktgeber bezeichneten Taktgeber (16) aufweist und serielle Daten mit einem zweiten, entfernten Takt empfängt und aussendet, dadurch gekennzeichnet, daß jedes Eingangstor (12) gebildet ist aus zwei Seriell-Parallel-Zwischenspeicherregistern (16, 17), aus Schreib-Freigabemitteln (19, 20, 21) und aus Lese-Freigabemitteln (22 bis 30), wobei die seriellen Eingänge der Register miteinander verbunden sind, während die Takteingänge abwechselnd durch das entfernte Taktsignal (HD) unter Steuerung durch die Schreib-Freigabeschaltung aktiviert werden und die parallelen Ausgänge mit der Busleitung (33) über Tri-State-Tore (26, 28) verbunden sind, die durch die Lese-Freigabeschaltung gesteuert sind und es ermöglichen, die beiden Register abwechselnd im Rhythmus des örtlichen Taktsignals auszulesen, so daß beim Einschreiben in das erste Register aus dem zweiten Register ausgelesen wird und umgekehrt in das zweite eingeschrieben und aus dem ersten ausgelesen wird.

3. Vermittlungsniveau eines Wählers für eine mit digitalen Datenpaketen arbeitendes Vermittlungsnetz nach Anspruch 1, dadurch gekennzeichnet, daß die zwei programmierten Schaltungen zum Schreiben und zum Lesen in den Arbeitsspeichern jeweils einen Arbeitsspeicher zu n Wörtern (43 und 51) umfassen, denen zwei Festwertspeicher (49, 50 und 52, 53) vorausgehen, und Informationen von den Eingangstoren und den Ausgangstoren empfangen, und daß die Steuerschaltung (50) ferner einen Modulo-n-Zähler (34) zum Adressieren der programmierten Logikschaltungen umfaßt, der durch einen Oszillator (35) aktiviert wird, wobei die Eingänge des Ausgangsmultiplexers (54) mit den Ausgängen der programmierten Logikschaltungen verbunden sind und seine Eingänge, die abwechselnd die Signale von der einen und der anderen programmierten Logikschaltung im Rhythmus der durch den Oszillator bestimmten Schreib- und Lesevorgänge abgeben, mit den Speichervorrichtungen der Ausgangstore verbunden sind.

Fig.1

Fig. 2

Fig.3

Fig.7

Fig.4

0 020 255

| AC | FA | AD | IPS |
|----|----|----|-----|

**Fig.5a**

**Fig.5b**

lire le mot d'adresse m
valeur de COM

ENO = 1 — NON

$\overline{AC}.FA = 1$ — NON

OUI

écrire le mot d'indication de fin de
paquet dans la mémoire de stockage
d'adresse IPS à l'adresse COM + AD

OPO = 1 — NON

OUI

0 → AC
0 → FA

$\overline{AC}.\overline{FA} = 1$ — OUI

1 → AC
ESO → IPS

NON

AC.$\overline{FA}$ = 1 — OUI

IRO = 1 — NON

1 → FA

NON

OUI

$\overline{AC}.FA = 1$ — OUI

ER = 1 — OUI

NON

NON

écrire COM et AD dans
la mémoire des priorités

écrire DL et AC.$\overline{FA}$ dans la mémoire
de stockage d'adresse IPS
à l'adresse COM + AD

0 → AC
1 → FA

AD+1 → AD

réécriture du mot en mémoire
incrémentation du compteur COM

5

| PO' | AC' | AD' | COM' |
|-----|-----|-----|------|

# Fig.6a

# Fig.6b

```
lire le mot d'état d'adresse m
valeur de COM
```

AC' = 0 — OUI → ORO = 1 — OUI →

```
1 ⟶ AC'
1 ⟶ PO'
ADO ⟶ AD'
COMO ⟶ COM'
```

NON

NON

```
lire l'octet DP et POL dans
la mémoire de stockage
d'adresse COM
à l'adresse COM' + AD
```

POL = PO' — NON → POL = 0 — NON →

```
fin de paquet
à l'octet précédent
```

OUI

OUI

```
chargement du registre
de sortie avec DP
```

```
chevauchement
```

```
0 ⟶ AC'
0 ⟶ PO'
```

```
0 ⟶ PO'
```

```
réécriture du mot d'état en mémoire
incrémentation du compteur COM
```